# NEW EUROPEAN PATENT SPECIFICATION

(11) **EP 2 750 497 B2**
(45) Date of publication and mention of the opposition decision: **27.02.2019**
(45) Mention of the grant of the patent: 29.07.2015
(21) Application number: 12791546.0
(22) Date of filing: 21.09.2012
(51) Int. Cl.: A01K 73/02, A01K 61/00, A01K 75/00, A01K 73/10

(54) **SYSTEM AND METHOD FOR SORTING FISH DURING FISHING**
SYSTEM UND VERFAHREN ZUM SORTIEREN VON FISCHEN WÄHREND DES FISCHENS
SYSTÈME ET PROCÉDÉ DE TRI DE POISSONS PENDANT LA PÊCHE

(30) Priority: 22.09.2011 NO 20111284
(43) Date of publication of application: 09.07.2014
(73) Proprietor: Scantrawl a.s., 3167 Åsgårdstrand (NO)
(72) Inventor: SKJOLD-LARSEN, Henning, 3167 Åsgårdstrand (NO)
(74) Representative: Onsagers AS
(86) International application number: PCT/IB2012/055023
(87) International publication number: WO 2013/042075

(56) References cited:
- WO-A1-98/25452
- WO-A1-2005/004593
- WO-A1-2008/056988

## Description

### The scope of the invention

The invention relates to a system and a method for sorting fish during fishing.

### Background

Trawl systems employed during fishing normally consist of a trawl and a large trawl bag or several smaller trawl bags. The trawl consists of a funnel which collects the fish and guides the fish backwards to one or more trawl bags which collect the fish. The trawl bags may be equipped with two steel rails which enable them to be mounted on a framework in connection with the trawl, and where each trawl bag can be opened or closed as required. The opening and closing mechanism of the trawl bags is driven by a motor which is controlled from the vessel via a two-way communication link, where one transducer (transmitter/receiver) is located in the ship's hull while a second transducer is located in connection with the framework of the trawl. A steel rail (net profile) is mounted at the top and bottom of the trawl bags. The net profiles are coupled to a release unit and locked in an upper position on the framework. When the net profile is released and moved from an upper to a lower position, a signal will be given when the profile passes a net switch indicating that release has taken place. The signal is transmitted to the vessel via the communication link. In practice it has proved to be difficult to know what kind of fish and the size of the fish that are in the trawl and the trawl bags without pulling the trawl up on deck. Nor is there any exact information on where the fish is located in the sea, or where the fish enters the trawl. In other words it is a case of "fishing in the dark". An object of the present invention is therefore to provide a system for monitoring and sorting fish during fishing.

WO 2005/004593 describes a trawl apparatus which has a sorting means so that seafood/biomass, for example fish or foreign objects over a certain size do not pass through the sorting means.

WO98/25452 discloses another example of prior art.

### Summary of the invention

The applicant has developed a system for monitoring fish which are on the way into one or more trawl bags in order to work out the kind of fish, number of fish (quantity) and the size of the fish. The system which has been developed employs a part of the above-described trawl system in addition to a monitoring device located in front of the trawl bag, and preferably in front of a sorting grid. A sorting grid can be employed for separating unwanted types of fish - secondary catch, in addition to fish which is too small - small fry. The monitoring device is in communication with the transducer and/or processing equipment located on the vessel or in connection with the trawl. The monitoring device may be in the form of a camera, echo sounder, trawl eye or other devices which permit real time monitoring of the inlet to the trawl bags. By providing such a system, an operator may either give a signal to a device to move one or more of the trawl bags on the framework depending on the amount of fish, kind of fish and size of the fish, or the movement may be performed automatically by means of calculations and on a signal from the processing equipment. In order to avoid unwanted fish, for example with regard to the size or type of fish, filling the trawl, the operator may either give a signal to a device which moves the opening of the trawl bag or the opening may be moved automatically by using the device, with the result that the fish flow right through the trawl and past the trawl bags. Time is thereby saved when the trawl is pulled up to the vessel by minimising the time spent on sorting unwanted fish. The opening where the fish slip through may be anywhere in the framework: at the top, in the middle, at the bottom, on the side or in another suitable area.

The invention comprises a system as described in the independent patent claim 1 and in the independent method claim 7, while embodiments of the invention are described in the dependent patent claims.

The invention relates to a system for sorting fish where the system comprises;
- a trawl consisting of at least one trawl bag, and where the at least one trawl bag has an opening which covers a part of an inflow area in the trawl,
- at least one monitoring device arranged in connection with the inflow area and where signals can be transmitted to a processing unit from the at least one monitoring device, and
- where a device, based on data from the processing unit, can move the opening in the at least one trawl bag to a position where fish flow through the inflow area but on the outside of the at least one trawl bag.

The invention also relates to a method for sorting fish when using a trawl where the method comprises the steps:
- monitoring an inflow area in the trawl by employing at least one monitoring device,
- transmitting the signals from the monitoring device to a processing unit, and
- based on data from the processing unit, employing a device in order to move an opening in the at least one trawl bag to a position where fish flow through the inflow area but on the outside of the at least one trawl bag.

The device employed for opening and closing the trawl bags, in addition to movement of the trawl bags to or from a position where the fish can flow on the outside of the trawl bags, may be a motor or any other suitable device for movement which can be controlled via a two-way communication link from the processing unit.

In an embodiment the processing unit may be provided on the surface, while in another embodiment the processing unit may be arranged in connection with the at least one trawl bag.

In another embodiment the at least one monitoring device may be in the form of a camera, echo sounder, trawl eye or any other device which is suitable for monitoring fish. Based on information from the monitoring device, the trawl bags may either be moved automatically or moved manually on a signal from an operator.

In an embodiment the at least one trawl bag may be provided with a set of rails to permit mounting on a framework in connection with the trawl. Having the at least one trawl bag moving on the rail permits unwanted fish to flow on the outside of the at least one trawl bag and prevents the at least one trawl bag from being filled with unwanted fish. The rail may be made of steel or another hard material such as metal, plastic etc.

In an embodiment the system may comprise a sorting grid. At least one of the following sensors may be mounted at the sorting grid: load meter, tensiometer or angle gauge. The sensors measure different parameters for the sorting grid in order to work out the amount of fish at the sorting grid This is done by measuring one or more of the following parameters: the load on the sorting grid, the tension in the sorting grid or the angle of the sorting grid The sensors can also measure the load, tension and the angle of the net to the trawl near the sorting grid. Based on measured data the amount of fish located at the sorting grid can be calculated.

In an embodiment the sorting grid may be arranged in front of the framework. Another embodiment may be envisaged where no framework is employed for the trawl bags but there is only a sorting grid in front of the trawl bags. In this embodiment openings will be provided in connection with the sorting grid in order to release unwanted fish.

The term "inflow area" in connection with the trawl should be understood to refer to the area in front of the trawl bags.

### Brief description of the figures

Fig. 1 illustrates a vessel towing a trawl
Figs. 2A-2C illustrate three different embodiments of trawl bags mounted on a framework.

### Detailed description of a preferred embodiment

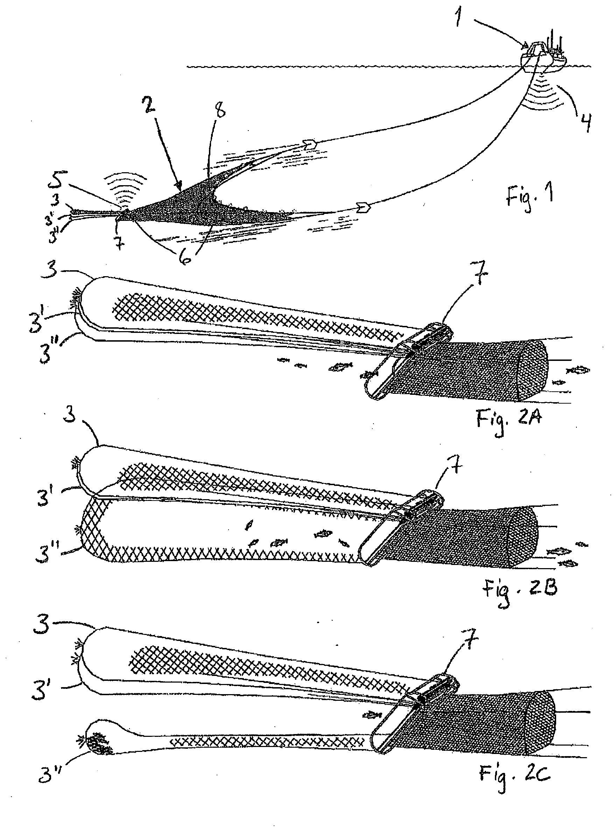

Fig. 1 illustrates a vessel 1 towing a trawl 2. The vessel 1 is equipped with a first transducer 4 which can communicate with a second transducer 5 mounted on the trawl 2. The trawl 2 comprises a framework 7 with rails where at least one trawl bag 3, 3', 3" can be attached, and where the framework 7 substantially corresponds to an inflow area (not shown) for the fish. The trawl 2 may furthermore be provided with a monitoring device 6 in the form of at least one camera, echo sounder, trawl eye or the like at one or more points in the trawl 2. A processing unit (not shown) arranged on the vessel 1 or in the trawl 2 processes data from the monitoring device 6, and, based on the data, a device such as a motor or the like may move the trawl doors 3, 3', 3" on the rails in the framework 7 in order to open or close the trawl bags 3, 3', 3". Other devices in connection with the trawl 2 may be one or more quantity sensors, trawl speed sensors, depth sensors, temperature sensors or distance sensors (not shown).

Figs. 2A-2C illustrate three embodiments of how three trawl bags 3, 3', 3" may be arranged relative to one another. In the embodiment in figure 2A the device has moved all three trawl bags 3, 3', 3" to an upper part of the framework 7 and the trawl bags 3, 3', 3" cover such a small part of the inflow area for the fish, thereby enabling the fish to flow on the outside of the trawl bags 3, 3', 3" on the bottom side.

Fig. 2B illustrates a second embodiment of the configuration of the trawl bags 3, 3', 3" where two of the trawl bags 3, 3' are moved by the device to the upper part of the framework 7, while the third trawl bag 3" covers the remaining inflow area.

Fig. 2C illustrates a third embodiment where two of the trawl bags 3, 3' are moved to the upper part of the framework 7 while the third trawl bag 3" is moved to the lower part of the framework 7. In this embodiment there is an open through-flow area for the fish in the area between the third trawl bag 3" and the two other trawl bags 3, 3'. A person skilled in the art will understand that the trawl bags 3, 3', 3" can be moved relative to one another by the device in any way whatever and that the through-flow area may be over, between, under or at the side of the trawl bags 3, 3', 3".

The invention is described herein in non-limiting embodiments. A person skilled in the art will appreciate that changes and modifications may be made which are within the scope of the invention as will be apparent in the attached claims.

## Claims

1. A system for sorting fish where the system comprises; a trawl (2) consisting of at least one trawl bag (3, 3', 3"), and where the at least one trawl bag (3, 3', 3") has an opening which covers a part of an inflow area in the trawl (2), **characterized in that** it further comprises;
- at least one monitoring device (6) arranged in connection with the inflow area for real time monitoring the inflow area and where signals can be transmitted to a processing unit from the at least one monitoring device (6), and
- where a device, based on data from the processing unit, depending on the amount of fish, kind of fish and size of the fish, can move the opening in the at least one trawl bag (3, 3', 3") to a position where fish flow through the inflow area but on the outside of the at least one trawl bag (3, 3', 3").

2. A system according to claim 1,
**characterised in that** the processing unit is arranged on the surface.

3. A system according to claim 1,
**characterised in that** the processing unit is arranged in connection with the at least one trawl bag (2).

4. A system according to one of the claims 1-3,
**characterised in that** the at least one monitoring device (6) is in the form of a camera, echo sounder, trawl eye etc.

5. A system according to one of the claims 1-4,
**characterised in that** the at least one trawl bag (3, 3', 3") has a set of rails which permit mounting on a framework (7) on the trawl (2).

6. A system according to one of the claims 1-5,
**characterised in that** the system comprises a sorting grid, and where at least one of the following sensors is mounted at the sorting grid: load meter, tensiometer or angle gauge.

7. A method for sorting fish when using a trawl (2) where the method comprises the steps;
- monitoring an inflow area in the trawl (2) by employing at least one monitoring device (6),
- transmitting the signals from the monitoring device (6) to a processing unit, and
- based on data from the processing unit, depending on the amount of fish, kind of fish and size of the fish, employing a device in order to move an opening in the at least one trawl bag (3, 3', 3") to a position where fish flow through the inflow area but on the outside of the at least one trawl bag (3, 3', 3").

## Patentansprüche

1. System zum Sortieren von Fischen, wobei das System umfasst: ein Schleppnetz (2), das aus mindestens einer Schleppnetztasche (3, 3', 3") besteht, und wobei die mindestens eine Schleppnetztasche (3, 3', 3") eine Öffnung hat, die einen Teil eines Einlaufbereichs in das Schleppnetz (2) abdeckt, **dadurch gekennzeichnet, dass** es darüber hinaus umfasst:
- mindestens eine Überwachungsvorrichtung (6), die in Verbindung mit dem Einlaufbereich zur Echtzeitüberwachung des Einlaufbereichs angeordnet ist, und wobei Signale von der mindestens einen Überwachungsvorrichtung (6) an eine Verarbeitungseinheit übertragen werden können, und
- wobei eine Vorrichtung auf Grundlage von Daten aus der Verarbeitungseinheit je nach der Fischmenge, der Fischart und der Größe der Fische die Öffnung in der mindestens einen Schleppnetztasche (3, 3', 3") zu einer Position bewegen kann, wo Fische zwar durch den Einlaufbereich, aber an der Außenseite der mindestens einen Schleppnetztasche (3, 3', 3") schwimmen.

2. System nach Anspruch 1,
**dadurch gekennzeichnet, dass** die Verarbeitungseinheit an der Oberfläche angeordnet ist.

3. System nach Anspruch 1,
**dadurch gekennzeichnet, dass** die Verarbeitungseinheit in Verbindung mit der mindestens einen Schleppnetztasche (2) angeordnet ist.

4. System nach einem der Ansprüche 1 bis 3,
**dadurch gekennzeichnet, dass** die mindestens eine Überwachungsvorrichtung (6) in Form einer Kamera, eines Echolots, eines Schleppnetzauges, etc. vorliegt.

5. System nach einem der Ansprüche 1 bis 4,
**dadurch gekennzeichnet, dass** die mindestens eine Schleppnetztasche (3, 3', 3") einen Satz Schienen aufweist, die eine Anbringung an einem Gestell (7) am Schleppnetz (2) zulassen.

6. System nach einem der Ansprüche 1 bis 5,
**dadurch gekennzeichnet, dass** das System ein Sortierungsgitter umfasst, und wobei mindestens einer der folgenden Sensoren am Sortierungsgitter angebracht ist: Lastmessgerät, Zugspannungsmeter oder Winkellehre.

7. Verfahren zum Selektieren von Fischen bei Verwendung eines Schleppnetzes (2), wobei das Verfahren die Schritte umfasst:
- Überwachen eines Einlaufbereichs in das Schleppnetz (2), indem mindestens eine Überwachungsvorrichtung (6) verwendet wird,
- Übertragen der Signale aus der Überwachungsvorrichtung (6) an eine Verarbeitungseinheit, und
- auf Grundlage von Daten aus der Verarbeitungseinheit, je nach der Fischmenge, der Fischart und der Größe der Fische, Verwenden einer Vorrichtung, um eine Öffnung in der mindestens einen Schleppnetztasche (3, 3', 3") zu einer Position zu bewegen, wo Fische zwar durch den Einlaufbereich, aber an der Außenseite der mindestens einen Schleppnetztasche (3, 3', 3") schwimmen.

## Revendications

1. Système destiné à trier le poisson, le système comprenant : un chalut (2) consistant en au moins une poche de chalut (3, 3', 3"), et la au moins une poche de chalut (3, 3', 3") ayant une ouverture qui couvre une partie d'une zone d'arrivée dans le chalut (2), **caractérisé en ce qu'**il comprend en outre :
- au moins un dispositif de surveillance (6) agencé relié à la zone d'arrivée pour surveiller en temps réel la zone d'arrivée et où des signaux peuvent être transmis à une unité de traitement à partir du au moins un dispositif de surveillance (6), et
- où un dispositif, en se basant sur les données provenant de l'unité de traitement, en fonction de la quantité de poisson, du type de poisson et de la taille du poisson, peut déplacer l'ouverture dans la au moins une poche de chalut (3, 3', 3") vers une position où les poissons circulent à travers la zone d'arrivée mais à l'extérieur de la au moins une poche de chalut (3, 3', 3").

2. Système selon la revendication 1,
**caractérisé en ce que** l'unité de traitement est agencée sur la surface.

3. Système selon la revendication 1,
**caractérisé en ce que** l'unité de traitement est agencée reliée à la au moins une poche de chalut (2).

4. Système selon l'une des revendications 1 à 3,
**caractérisé en ce que** le au moins un dispositif de surveillance (6) est sous la forme d'une caméra, d'un écho sondeur, d'un oeil de chalut, etc.

5. Système selon l'une des revendications 1 à 4,
**caractérisé en ce que** la au moins une poche de chalut (3, 3', 3") a un ensemble de rails qui permet un montage sur une structure (7) sur le chalut (2).

6. Système selon l'une des revendications 1 à 5,
**caractérisé en ce que** le système comprend une grille de tri, et où au moins l'un des capteurs suivants est monté au niveau de la grille de tri : un indicateur de charge, un tensiomètre ou une jauge angulaire.

7. Méthode destinée à trier le poisson lors de l'utilisation d'un chalut (2), la méthode comprenant les étapes de :
- surveillance d'une zone d'arrivée dans le chalut (2) en employant au moins un dispositif de surveillance (6),
- transmission des signaux à partir du dispositif de surveillance (6) vers une unité de traitement, et
- en se basant sur les données provenant de l'unité de traitement, en fonction de la quantité de poisson, du type de poisson et de la taille du poisson, emploi d'un dispositif afin de déplacer une ouverture dans la au moins une poche de chalut (3, 3', 3") vers une position où les poissons circulent à travers la zone d'arrivée mais sur l'extérieur de la au moins une poche de chalut (3, 3', 3").
